# EUROPEAN PATENT APPLICATION

(11) **EP 2 428 687 A1**
(43) Date of publication of application: **14.03.2012**
(21) Application number: 10772110.2
(22) Date of filing: 26.04.2010
(51) Int. Cl.: F16B 3/00, F16D 1/08

(54) **KEY COUPLING MECHANISM**

(30) Priority: 08.05.2009 JP 2009113653
(71) Applicant: Nabtesco Corporation, Tokyo 102-0093 (JP)
(72) Inventor: HOSODA, Shigeru, Fuwa-gun Gifu 503-2121 (JP)
(74) Representative: Barth, Stephan Manuel
(86) International application number: PCT/JP2010/002972
(87) International publication number: WO 2010/128583

(57) **Abstract**

Fretting induced by wear powder generated between a rotatable shaft and a coupling by minute relative reciprocating sliding motion is prevented from progressing so that durability is improved. A coupling keyway 14 is formed in a coupling 11 into which a rotatable shaft 12 is fitted. A rotatable shaft keyway 15 is formed in the rotatable shaft 12. A key 13 is fitted into the coupling keyway 14 and the rotatable shaft keyway 15. Recessed portions 16 are formed in the inner circumference 11a of the coupling 11 facing the rotatable shaft 12 so that wear powder generated between the coupling 11 and the rotatable shaft 12 can enter.

## Description

### Technical Field

The present invention relates to a key coupling mechanism that couples a rotatable shaft and a coupling via a key that fits into keyways that are formed respectively in the rotatable shaft and the coupling.

### Background Art

Conventionally, a key coupling mechanism that couples a rotatable shaft and a coupling via a key that fits into keyways that are formed respectively in the rotatable shaft and the coupling is known (see Patent Document 1, for example). As disclosed in Patent Document 1, in the key coupling mechanism, a rotatable shaft (output shaft 20) and a coupling (rotatable member 22) to which the rotatable shaft can be fitted are coupled via a key (33) that fits into keyways (31, 32) that are formed respectively in the rotatable shaft and the coupling. In such a key coupling mechanism, fine gaps that are provided in consideration of ease of assembly are located between the rotatable shaft and the coupling that are coupled via the key, resulting in minute relative reciprocating sliding motion during transmission of the rotational force. For this reason, the key coupling mechanism tends to be subjected to surface damage called "fretting", which occurs due to repetition of such a minute sliding motion. Note that the key coupling mechanism disclosed in Patent Document 1 is provided with a facility for forcefully circulating lubricating oil supplied between the rotatable shaft and the coupling via a hollow cavity formed in the coupling to improve the lubricity, thus reducing the occurrence of fretting.

### Citation List

### Patent Document

Patent Document 1: JP 3192775B2 (pages 2-3, FIG. 1)

### Disclosure of the Invention

### Problem to be Solved by the Invention

It appears that in the key coupling mechanism disclosed in Patent Document 1, the provision of the auxiliary facility for forcefully circulating lubricating oil is expected to improve the lubricity between the rotatable shaft and the coupling, thus reducing the occurrence of fretting. However, minute relative reciprocating sliding motion occurs between the rotatable shaft and the coupling, and therefore fine wear powder resulting from partial seizure is generated between the rotatable shaft and the coupling. Then, upon generation of wear powder, this wear powder leads to the progress of fretting, and, moreover, the occurrence of backlash causes a reduction in the machine accuracy and degradation of the function, which also leads to the problem of vibrations and noise. Furthermore, solidification of wear powder causes a damage that renders disassembly or repair of the key coupling mechanism impossible. Accordingly, there is a problem in that it is difficult to suppress the progress of fretting induced by wear powder generated due to minute relative reciprocating sliding motion and the reduction of durability of the key coupling mechanism. In addition, the complexity and the size of the facility are increased in the case of performing the forceful circulation of the lubricating oil.

In view of the foregoing circumstances, it is an object of the present invention to provide a key coupling mechanism that can suppress the progress of fretting induced by wear powder generated due to minute relative reciprocating sliding motion between the rotatable shaft and the coupling, thus improving the durability.

### Means for Solving the Problem

A key coupling mechanism according to a first aspect of the present invention for achieving the above-described object includes: a coupling to which a rotatable shaft can be fitted; a coupling keyway formed in the coupling; a rotatable shaft keyway formed in the rotatable shaft; and a key that fits into the coupling keyway and the rotatable shaft keyway. In the key coupling mechanism according to the first aspect of the invention, a recessed portion that is recessed such that wear powder generated between the coupling and the rotatable shaft can enter thereinto is provided in at least one of an inner circumference of the coupling that faces the rotatable shaft and an outer circumference of the rotatable shaft that faces the coupling.

According to this aspect of the invention, upon generation of wear powder between the rotatable shaft and the coupling due to the occurrence of minute relative reciprocating sliding motion during transmission of the rotational force, the wear powder enters into the recessed portion formed in at least one of the inner circumference of the coupling and the outer circumference of the rotatable shaft and will be held there. Accordingly, it is possible to suppress the damage of the inner circumference of the coupling and the outer circumference of the rotatable shaft caused by the wear powder generated by the minute relative reciprocating sliding motion, thus suppressing the progress of fretting induced by the wear powder. Then, it is possible to suppress the occurrence of backlash caused by the wear powder and the resulting reduction in the machine accuracy and degradation of the function, thus suppressing vibrations and noise as well. Moreover, it is also possible to suppress solidification of the wear powder, thus also suppressing a damage that renders disassembly or repair of the key coupling mechanism impossible. Therefore, it is possible to improve the durability of the key coupling mechanism. Further, due to the configuration in which the recessed portion is formed in at least one of the inner circumference of the coupling and the outer circumference of the rotatable shaft, there is no need for an auxiliary facility that may cause an increase in the complexity and the size, and it is possible to improve the durability of the key coupling mechanism with a simple configuration.

Therefore, according to the present invention, it is possible to provide a key coupling mechanism that can suppress the progress of fretting induced by wear powder generated due to minute relative reciprocating sliding motion between the rotatable shaft and the coupling, thus improving the durability.

According to a key coupling mechanism of a second aspect of the invention, in the key coupling mechanism of the first aspect of the invention, the recessed portion is formed as a groove. With this aspect of the invention, the recessed portion is formed as a groove, and therefore wear powder can easily enter into the recessed portion. Moreover, wear powder that has once entered into the recessed portion cannot easily exit, and therefore it is possible to further suppress the damage of the inner circumference of the coupling and the outer circumference of the rotatable shaft caused by the wear powder. Merely forming a groove on the inner circumference of the coupling or the outer circumference of the rotatable shaft enables easy processing of a recessed portion into which wear powder enter.

According to a key coupling mechanism of a third aspect of the invention, in the key coupling mechanism of the second aspect of the invention, the recessed portion is formed as a spiral-shaped groove. With this aspect of the invention, the recessed portion formed as a groove is provided in a spiral fashion, and therefore it is possible to achieve a recessed portion having a groove-shaped structure that makes the entrance of wear powder more easy and the exit thereof more difficult, thus further suppressing the damage of the coupling and the rotatable shaft caused by the wear powder. Since the groove-shaped recessed portion is formed in a spiral fashion, it is possible to process a groove-shaped recessed portion that is efficiently distributed on the inner circumference of the coupling or the outer circumference of the rotatable shaft across the circumferential direction and the axial direction.

According to a key coupling mechanism of a fourth aspect of the invention, in the key coupling mechanism of any one of the first to third aspects of the invention, a lubricant is disposed in the recessed portion. According to this aspect of the invention, the lubricant disposed in the recessed portion improves the lubricity between the coupling and the rotatable shaft, thus reducing the generation of the wear powder and also reducing the damage of the coupling and the rotatable shaft caused by the generated wear powder. Further, the lubricant disposed in the recessed portion allows wear powder to more easily enter into the recessed portion.

### Effects of the Invention

According to the present invention, it is possible to provide a key coupling mechanism that can suppress the progress of fretting induced by wear powder generated due to minute relative reciprocating sliding motion between the rotatable shaft and the coupling, thus improving the durability.

### Brief Description of the Drawings

[FIG. 1] FIG. 1 shows cross-sectional views of a key coupling mechanism according to one embodiment of the present invention.
[FIG. 2] FIG. 2 is an enlarged partial cross-sectional view showing part of an axial cross section of the inner circumference of a coupling of the key coupling mechanism shown in FIG. 1.

### Description of Embodiments

Hereinafter, an embodiment of the present invention will be described with reference to the drawings. The embodiment of the present invention is widely applicable as a key coupling mechanism that couples a rotatable shaft and a coupling via a key that fits into keyways that are respectively formed in the rotatable shaft and the coupling. For example, the embodiment is widely applicable to various uses including, for example, windmills, machine tools, construction equipment, and robots.

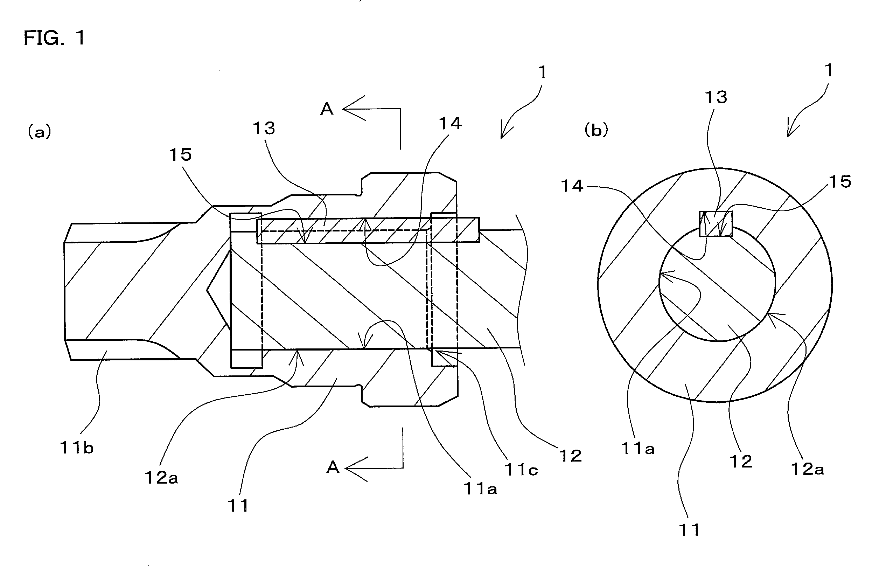

FIG. 1 shows cross-sectional views of a key coupling mechanism 1 according to one embodiment of the present invention, showing an axial cross-sectional view of the key coupling mechanism 1 (FIG. 1(a)) and a cross-sectional view taken along the arrows A-Ain FIG. 1(a) (FIG. 1(b)). As shown in FIG. 1, the key coupling mechanism 1 includes a coupling 11, a rotatable shaft 12, a key 13, a coupling keyway 14 formed in the coupling 11, and a rotatable shaft keyway 15 formed in the rotatable shaft 12.

The rotatable shaft 12 is configured, for example, as an output shaft of a drive motor (not shown), and is formed as a shaft member having a circular cross-sectional shape. One rotatable shaft keyway 15 extending in the axial direction is formed in an outer circumference 12a at the end of the rotatable shaft 12.

The coupling 11 is provided as a short axis member to which the rotatable shaft 12 can be fitted, and includes an output gear portion 11b formed in the outer circumference at its one end and a fitting hole 11c opened in the other end. The fitting hole 11c is formed as a hole having a circular cross-sectional shape to which the end of the rotatable shaft 12 where the rotatable shaft keyway 15 is provided can be fitted. One coupling keyway 14 extending in the axial direction is formed in an inner circumference 11a of the coupling 11 that defines the fitting hole 11c and that faces the rotatable shaft 12 that is fitted to the fitting hole 11c.

The key 13 is provided as a non-gradient parallel key having a rectangular cross-sectional shape, and is formed as a key that fits into the rotatable shaft keyway 15 and the coupling keyway 14. With the key 13 fitted into the rotatable shaft keyway 15, fitting the rotatable shaft 12 into the fitting hole 11c causes the key 13 to fit into the coupling keyway 14 as well, thereby coupling the rotatable shaft 12 and the coupling 11 via the key 13 as shown in FIG. 1. In the key coupling mechanism 1 configured in this manner, the rotational force that has been input from the rotatable shaft 12 is transmitted to the coupling 12 via the portion coupled by the key, and the rotational force is output from the gear portion 11b to another gear (not shown) meshed with the gear portion 11b. Although not shown in FIG. 1, it is possible to further provide a bolt member that can penetrate and be screwed to the end portion of the rotatable shaft 12 fitted to the fitting hole 11c from the gear portion 11b side along the center line of the coupling 11, and further fasten the rotatable shaft 12 and the coupling 11 in the axial direction with a screw

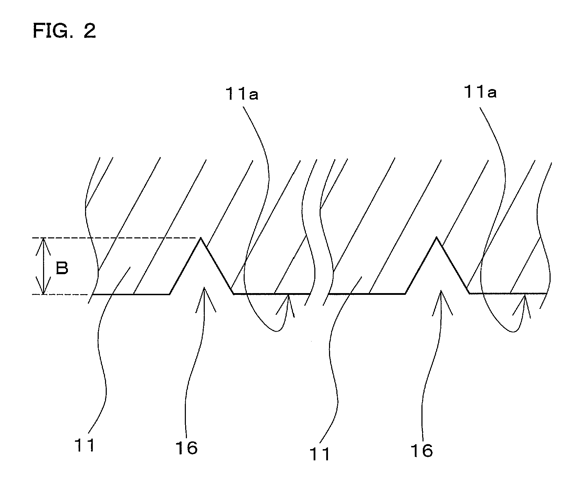

FIG. 2 is an enlarged partial cross-sectional view showing part of an axial cross section of the inner circumference 11a of the coupling 11. Note that FIG. 2 shows cutaway sections of two areas with their axial locations corresponding to each other. As shown in FIG. 2, a recessed portion 16 that is recessed such that wear powder generated between the coupling 11 and the rotatable shaft 12 can enter thereinto is provided along the entire inner circumference 11a of the coupling 11, excluding the portion where the coupling keyway 14 is provided. The recessed portion 16 is formed as a spiral-shaped groove and is provided, for example, as an internally threaded groove formed by internal threading. Further, a solid lubricant using graphite, molybdenum disulfide, polytetrafluoroethylene, or the like is disposed in the recessed portion 16 by bonding. Note that although a lubricant other than a solid lubricant (for example, grease) can be used as the lubricant, the use of a solid lubricant can achieve the effect of easily maintaining the lubricating effect due to the higher resistant to outflow than in the case of using grease.

With the key coupling mechanism 1 described above, upon generation of wear powder between the rotatable shaft 12 and the coupling 11 due to the occurrence of minute relative reciprocating sliding motion during transmission of the rotational force, the wear powder enters into the recessed portion 16 formed in the inner circumference 11a of the coupling 11 and will be held there. Accordingly, it is possible to suppress the damage of the inner circumference 11a of the coupling 11 and the outer circumference 12a of the rotatable shaft 12 caused by the wear powder generated by the minute relative reciprocating sliding motion, thus suppressing the progress of fretting induced by the wear powder. Then, it is possible to suppress the occurrence of backlash caused by the wear powder and the resulting reduction in the machine accuracy and degradation of the function, thus suppressing vibrations and noise as well. Moreover, it is also possible to suppress solidification of the wear powder, thus also suppressing a damage that renders disassembly or repair of the key coupling mechanism 1 impossible. Therefore, it is possible to improve the durability of the key coupling mechanism 1. Further, due to the configuration in which the recessed portion 16 is formed in the inner circumference 11a of the coupling 11, there is no need for an auxiliary facility that may cause an increase in the complexity and the size, and it is possible to improve the durability of the key coupling mechanism 1 with a simple configuration.

Accordingly, with this embodiment, it is possible to provide a key coupling mechanism 1 that can suppress the progress of fretting induced by wear powder generated due to minute relative reciprocating sliding motion between the rotatable shaft 12 and the coupling 11, thus improving the durability.

With the key coupling mechanism 1, the recessed portion 16 is formed as a groove, and therefore wear powder can easily enter into the recessed portion 16. Moreover, wear powder that has once entered into the recessed portion 16 cannot easily exit, and therefore it is possible to further suppress the damage of the inner circumference 11a of the coupling 11 and the outer circumference 12a of the rotatable shaft 12 caused by the wear powder. In addition, the recessed portion 16 formed as a groove is provided in a spiral fashion, and therefore it is possible to achieve a recessed portion 16 having a groove-shaped structure that makes the entrance of wear powder more easy and the exit thereof more difficult. Merely forming a groove on the inner circumference 11a of the coupling 11 or the outer circumference 12a of the rotatable shaft 12 enables easy processing of a recessed portion 16 into which wear powder enters. Since the groove-shaped recessed portion 16 is formed in a spiral fashion, it is possible to process a groove-shaped recessed portion 16 that is efficiently distributed on the inner circumference 11a of the coupling 11 across the circumferential direction and the axial direction. That is, although a plurality of recessed portions may be formed separately as independent grooves, the formation of the recessed portion 16 as a continuous spiral-shaped groove can improve the workability of a recessed portion formed as a groove that is efficiently distributed.

With the key coupling mechanism 1, the lubricant disposed in the recessed portion 16 improves the lubricity between the coupling 11 and the rotatable shaft 12, thus reducing the generation of the wear powder and also reducing the damage of the coupling 11 and the rotatable shaft 12 caused by the generated wear powder. Further, the lubricant disposed in the recessed portion 16 allows wear powder to more easily enter into the recessed portion 16.

Note that as a recessed portion 16, the present inventor formed a metric triangular thread having a diameter of 28 mm (M28), a pitch of 1 mm, and a thread grade of 6G (tolerance grade 6, tolerance position G) by fine-threading the inner circumference 11a of the coupling 11, and carried out an experiment to verify the effects. In the effect validation experiment, a test device was used in which an electric motor was used as the drive side and an oil-hydraulic motor was used as the load side, and the electric motor was connected to the rotatable shaft 12 side and the oil-hydraulic motor was connected to the coupling 11 side via a chain coupling. Then, the experiment was carried out by operating a key coupling mechanism 1 in which the recessed portion 16 described above was formed and a normal key coupling mechanism for comparison in which no recessed portion 16 was formed were tested under the test operation conditions in which predetermined torque, number of revolutions, operating time, and the like were set. As for the evaluation of the experiment results, the state of the surface damage of the inner circumference 11a of the coupling 11 and the outer circumference 12a of the rotatable shaft 12 and the machine accuracy were examined after the completion of the test operation for the key coupling mechanism 1 in which the recessed portion 16 was provided and the key coupling mechanism for comparison in which no recessed portion 16 was provided. As a result, surface damage caused by fretting induced by generation of wear powder and a reduction in machine accuracy that was considered to make the continued use difficult were confirmed for the key coupling mechanism for comparison. On the other hand, for the key coupling mechanism 1 provided with the recessed portion 16 described above, no surface damage caused by fretting induced by generation of wear powder was observed, and only a minor degree of reduction in machine accuracy that was sufficient for making the continuous use possible was observed.

Further, the present inventor confirmed experimentally that when the depth of the groove of the recessed portion 16 from the inner circumference 11a of the coupling 11 (the depth dimension indicated by the double-ended arrow in FIG. 2) is 0.04 mm (40 µm) or greater, it is possible to hold the wear powder sufficiently and suppress the occurrence of fretting induced by generation of wear powder. It was also confirmed that when the depth of the groove of the recessed portion 16 is 0.14 mm (140 µm) or less, the effect of suppressing fretting induced by generation of wear powder can be sufficiently achieved, and the depth is at such a level that does not affect the strength of fitting between the rotatable shaft 12 and the coupling 11.

Although an embodiment of the present invention has been described thus far, the present invention is not limited to the above-described embodiment, and various modifications may be made within the scope recited in the claims. For example, the following modifications are possible.

(1) Although this embodiment has been described, taking, as an example, a key coupling mechanism in which the recesses portion is formed in the inner circumference of the coupling that faces the rotatable shaft, this need not be the case. That is, it is possible to adopt a key coupling mechanism in which the recessed portion is formed in the outer circumference of the rotatable shaft that faces the coupling, or a key coupling mechanism in which the recessed portion is formed in both the inner circumference of the coupling and the outer circumference of the rotatable shaft.

(2) Although this embodiment has been described, taking, as an example, a recessed portion that is formed as a spiral-shaped groove, this need not be the case; it is possible to provide a recessed portion provided with a groove other than a spiral-shaped groove (for example, a linear groove). It is also possible to provide a plurality of recessed portions as independent grooves that have been formed separately. The recessed portion is not limited to those formed as grooves, but may be formed as dimples, or may be fine recessed portions formed by surface roughening. In the case of forming recessed portions by surface roughening, the recessed portions may be formed, for example, with the surface roughness or center-line average roughness (Ra) set to a high roughness in the range from about 5 µm to 20 µm. It is also possible to form a plurality of types of recessed portions as the recessed portions. For example, it is possible to provide a high-roughness recessed portion and a recessed portion of a threaded groove by forming a spiral threaded groove on a surface that has been subjected to the above-described surface roughening.

(3) Although this embodiment has been described, taking, as an example, the case where the key that fits into the coupling keyway and the rotatable shaft keyway is provided as a parallel key, this need not be the case. For example, the key may be configured as a taper key, a woodruff key, or the like.

### Industrial Applicability

The present invention is widely applicable as a key coupling mechanism that couples a rotatable shaft and a coupling via a key that fits into keyways that are respectively formed in the rotatable shaft and the coupling.

### Descriptions of Reference Numerals

- 1: Key coupling mechanism
- 11: Coupling
- 11a: Inner circumference of coupling
- 12: Rotatable shaft
- 12a: Outer circumference of rotatable shaft
- 13: Key
- 14: Coupling keyway
- 15: Rotatable shaft keyway
- 16: Recessed portion

## Claims

1. A key coupling mechanism comprising:
a coupling to which a rotatable shaft can be fitted;
a coupling keyway formed in the coupling;
a rotatable shaft keyway formed in the rotatable shaft; and
a key that fits into the coupling keyway and the rotatable shaft keyway,
wherein a recessed portion that is recessed such that wear powder generated between the coupling and the rotatable shaft can enter thereinto is provided in at least one of an inner circumference of the coupling that faces the rotatable shaft and an outer circumference of the rotatable shaft that faces the coupling.

2. The key coupling mechanism according to claim 1,
wherein the recessed portion is formed as a groove.

3. The key coupling mechanism according to claim 2,
wherein the recessed portion is formed as a spiral-shaped groove.

4. The key coupling mechanism according to any one of claims 1 to 3,
wherein a lubricant is disposed in the recessed portion.
